# EUROPÄISCHE PATENTSCHRIFT

(11) **EP 3 953 217 B1**
(45) Veröffentlichungstag und Bekanntmachung des Hinweises auf die Patenterteilung: **08.10.2025**
(21) Anmeldenummer: 20734346.8
(22) Anmeldetag: 19.06.2020
(51) Int. Cl.: B60R 16/03, H02J 7/14, B60T 8/88

(54) **BORDNETZ UND LEISTUNGSMODUL FÜR EIN SOLCHES**
VEHICLE ELECTRICAL SYSTEM AND POWER MODULE THEREFOR
RÉSEAU DE BORD ET MODULE DE PUISSANCE ASSOCIÉ

(30) Priorität: 21.06.2019 DE 102019209026
(43) Veröffentlichungstag der Anmeldung: 16.02.2022
(73) Patentinhaber: LEONI Bordnetz-Systeme GmbH, 97318 Kitzingen (DE); HELLA GmbH & Co. KGaA, 59552 Lippstadt (DE)
(72) Erfinder: KAHNT, Sebastian, 97753 Karlstadt (DE); KRIEGER, Jürgen, 97753 Karlstadt (DE)
(74) Vertreter: FDST Patentanwälte
(86) Internationale Anmeldenummer: PCT/EP2020/067083
(87) Internationale Veröffentlichungsnummer: WO 2020/254566

(56) Entgegenhaltungen:
- WO-A1-2004/042888
- DE-A1- 10 053 584
- DE-A1- 10 150 379
- DE-A1- 102005 004 330
- DE-A1- 102014 214 103
- DE-A1- 102015 222 544
- DE-A1- 102016 112 764
- DE-A1- 102017 208 030
- DE-C1- 19 846 319
- US-A1- 2017 113 637

## Beschreibung

Die Erfindung betrifft ein Bordnetz sowie ein Leistungsmodul für ein solches Bordnetz.

Ein Bordnetz dient regelmäßig der Verteilung von Energie innerhalb eines Fahrzeugs. Das Bordnetz weist hierzu üblicherweise mehrere Versorgungsleitungen auf, um diverse Verbraucher zwecks Versorgung mit elektrischer Energie mit einem oder mehreren Energiequellen zu verbinden. Die Verbraucher und die Energiequellen sind entsprechend an das Bordnetz angeschlossen. Manche Bordnetze weisen mehrere Subnetze mit unterschiedlichen Spannungslagen auf, um Verbraucher mit unterschiedlichen elektrischen Anforderungen jeweils optimal betreiben zu können. Die Subnetze sind miteinander elektrisch verbunden, sodass bei Bedarf zwischen diesen Energie ausgetauscht werden kann.

Ein Leistungsmodul dient zur Verteilung der Energie innerhalb eines Bordnetzes.

Die DE 101 50 379 A1 beschreibt ein Energieversorgungssystem für sicherheitsrelevante Verbraucher. Diese werden jeweils über zwei separate Versorgungsleitungen mit Energie versorgt.

Die DE 10 2014 214 103 A1 beschreibt eine Bordnetztopologie, mit zwei redundanten Verbrauchern in je einem von zwei sicherheitsrelevanten Teilnetzen. Eines der Teilnetze ist mit einem Niederspannungsbordnetz verbunden, das andere Teilnetz mit einem Hochspannungsbordnetz. Die beiden Bordnetze sind über einen DC/DC-Wandler verbunden. Die redundanten Verbraucher können unabhängig voneinander aus den beiden Bordnetzen versorgt werden.

Die DE 100 53 584 A1 beschreibt eine redundante Spannungsversorgung für sicherheitsrelevante Verbraucher in einem Kraftfahrzeug. Durch eine spezielle Aufteilung kann auf DC/DC-Wandler verzichtet werden.

Weitere Bordnetze werden beschrieben in WO 2004/042888 A1, DE 10 2017 208 030 A1 und DE 198 46 319 C1.

Vor diesem Hintergrund ist es eine Aufgabe der Erfindung, ein verbessertes Bordnetz anzugeben, welches eine möglichst hohe Sicherheit bezüglich der Versorgung eines sicherheitsrelevanten Verbrauchers mit Energie gewährleistet. Weiter soll ein verbessertes Leistungsmodul für ein solches Bordnetz angegeben werden.

Die Aufgabe wird erfindungsgemäß gelöst durch ein Bordnetz mit den Merkmalen gemäß Anspruch 1 sowie durch ein Leistungsmodul mit den Merkmalen gemäß Anspruch 14. Vorteilhafte Ausgestaltungen, Weiterbildungen und Varianten sind Gegenstand der Unteransprüche. Dabei gelten die Ausführungen im Zusammenhang mit dem Bordnetz sinngemäß auch für das Leistungsmodul und umgekehrt.

Das Bordnetz ist ausgebildet zur Verwendung in einem Fahrzeug. Das Fahrzeug ist insbesondere ein Kraftfahrzeug, z.B. ein PKW oder LKW. Das Fahrzeug ist insbesondere elektrisch oder verbrennungsmotorisch angetrieben oder beides.

Das Bordnetz weist ein erstes Subnetz und ein zweites Subnetz auf, an welche jeweils wenigstens eine Energiequelle angeschlossen ist, wobei das erste Subnetz eine andere Spannungslage aufweist als das zweite Subnetz. Demnach ist an das erste Subnetz zumindest eine erste Energiequelle angeschlossen und an das zweite Subnetz zumindest eine zweite Energiequelle. Die Energiequelle des jeweiligen Subnetzes legt dessen Spannungslage fest. Die Spannungslage des jeweiligen Subnetzes gibt an, welche Spannung in dem Subnetz zur Versorgung von Verbrauchern zur Verfügung steht. Entsprechend der unterschiedlichen Spannungslagen der beiden Subnetze weisen demnach die beiden Energiespeicher unterschiedliche Spannungen auf. Bevorzugterweise weist das erste Subnetz eine geringere Spannungslage auf als das zweite Subnetz.

Das Bordnetz weist wenigstens einen sicherheitsrelevanten Verbraucher auf, welcher an eines der Subnetze angeschlossen ist, wobei dieses Subnetz zwei Teilnetze aufweist und der Verbraucher an beide Teilnetze angeschlossen ist, sodass der Verbraucher über zwei separate Versorgungsleitungen mit der Energiequelle des Subnetzes verbunden ist. Dies steht im Gegensatz zur eingangs genannten DE 101 50 379 A1, in welcher eine Komponente gerade nicht über zwei separate Verbindungsleitungen mit derselben Energiequelle des entsprechenden Subnetzes verbunden ist. Nachfolgend wird unter "Verbraucher" ein sicherheitsrelevanter Verbraucher verstanden, sofern nicht explizit anders angegeben. Der Verbraucher ist dabei direkt insbesondere lediglich an das eine der Subnetze angeschlossen, d.h. an das andere Subnetz nicht direkt. Die Energiequelle ist insbesondere an lediglich eines der Teilnetze angeschlossen, die beiden Teilnetze sind jedoch derart miteinander verbunden, dass beide Teilnetze von der Energiequelle versorgt werden. Das Subnetz ist also in zwei Teilnetze unterteilt, und jedes Teilnetz umfasst eine der Versorgungsleitungen, sodass der Verbraucher über unterschiedliche Teilnetze mit Energie versorgbar ist, d.h. redundant mit der Energiequelle verbunden ist. Beim Ausfall einer der Versorgungsleitungen oder eines der Teilnetze erfolgt eine Energieversorgung immer noch über das andere Teilnetz mit der anderen Versorgungsleitung. Ein oder mehrere gegebenenfalls vorhandene Komfortverbraucher sind demgegenüber jeweils vorzugsweise lediglich an ein einzelnes Teilnetz angeschlossen, werden also gerade nicht redundant versorgt.

Unter einem "sicherheitsrelevanten Verbraucher" wird ein Verbraucher verstanden, welcher eine sicherheitsrelevante Funktion, d.h. eine Sicherheitsfunktion erfüllt. Solche Verbraucher werden insbesondere gemäß ISO 26262 (allgemeiner IEC 61508) über eine Risikoklassifikation einer Risikoklasse, kurz "ASIL" (automotive safety integrity level), zugeordnet und daher vereinfachend auch als ASIL-Verbraucher bezeichnet. Ein sicherheitsrelevanter Verbraucher dient dazu, die Sicherung und insbesondere die Unversehrtheit einer Maschine, insbesondere eines Fahrzeugs, oder einer oder mehrerer Personen, insbesondere Insassen eines Fahrzeugs oder anderer Verkehrsteilnehmer, oder einer Kombination hiervon zuverlässig und betriebssicher zu gewährleisten. Sicherheitsrelevante Verbraucher eines Fahrzeugs sind beispielsweise ein Bremssystem, eine Lenkung, eine Wankstabilisierung, ein Antriebssystem, eine Fahrwerksteuerung, ein Airbag, ein System zur Sicherstellung der Fahrzeugstabilität und dergleichen. Sicherheitsrelevante Verbraucher sind abzugrenzen von Komfortverbrauchern, welcher gerade keine sicherheitsrelevante Funktion erfüllen, sondern lediglich eine oder mehrere Komfortfunktionen. Solche Komfortverbraucher werden auch der Klasse "QM" zugeordnet und daher auch als QM-Verbraucher gekennzeichnet. Beispiele für Komfortverbraucher sind eine Klimaanlage, eine Sitzverstellung, ein Audiosystem und dergleichen. Für sicherheitsrelevante Verbraucher ergibt sich regelmäßig, z.B. aus den zitierten Normen, die Anforderung einer redundanten Energieversorgung. Eine solche Anforderung besteht für Komfortverbraucher typischerweise nicht.

Das Bordnetz weist weiter ein Leistungsmodul auf, welches die beiden Subnetze miteinander verbindet und welches derart ausgebildet ist, dass jede der beiden Versorgungsleitungen mit beiden Energiequellen verbindbar ist, sodass der Verbraucher über beide Versorgungsleitungen jeweils aus beiden Energiequellen versorgbar ist. Das ist gleichbedeutend damit, dass ein Verbraucher an einem der Subnetze über wenigstens zwei unterschiedliche Teilnetze ebendieses Subnetzes aus mehreren unterschiedlichen Energiequellen versorgbar ist, welche an unterschiedliche Subnetze angeschlossen sind. Der Verbraucher ist also nicht lediglich redundant mit einer einzelnen Energiequelle im gleichen Subnetz verbunden, sondern ist auch mit der Energiequelle aus dem anderen Subnetz verbunden. Zusätzlich zur Redundanz der Verbindung ist demnach auch eine Redundanz der Energiequelle realisiert. Der Verbraucher ist einerseits über zwei separate Verbindungsleitungen versorgbar und andererseits auch über zwei separate Energiequellen.

Das Leistungsmodul dient insgesamt der Verteilung der elektrischen Energie der Energiequellen auf die diversen Subnetze und Teilnetze und gewährleistet somit vorteilhaft die beschriebene Redundanz der Energieversorgung des Verbrauchers. Das Leistungsmodul ist ausgebildet, elektrische Energie zu verteilen. Das Leistungsmodul ist vorzugsweise eine elektrische Schaltung, welche in einer zweckmäßigen Ausgestaltung eine Platine aufweist, auf welcher geeignete Bauteile zur Realisierung der Funktionalität des Leistungsmoduls angeordnet und miteinander verschaltet sind. Unter "elektrischer Energie" wird vorliegend insbesondere Energie zum Betrieb eines jeweiligen Verbrauchers verstanden, d.h. es wird eine gewisse elektrische Leistung bereitgestellt, sodass der Verbraucher eine Funktion ausführen kann. Dies steht im Gegensatz zu elektrischen Signalen oder Steuersignalen, welche lediglich zur Datenübertragung von oder zu einem Verbraucher dienen und keine Leistung übertragen und daher nicht zum Betrieb des Verbrauchers dienen.

Die Energiequelle eines jeweiligen Subnetzes ist direkt insbesondere lediglich an ebenjenes Subnetz angeschlossen und mit dem anderen Subnetz lediglich mittelbar über das Leistungsmodul verbunden. Gleiches gilt analog für den Verbraucher, welcher entsprechend direkt lediglich an das eine Subnetz angeschlossen ist, an das andere Subnetz jedoch lediglich mittelbar über das Leistungsmodul. Eine jeweilige Energiequelle ist insbesondere an lediglich ein Teilnetz eines jeweiligen Subnetzes angeschlossen und mit weiteren Teilnetzen daher lediglich mittelbar verbunden, insbesondere über das Leistungsmodul. Das Leistungsmodul ist somit ein Vermittler oder Verteiler zwischen den beiden Subnetzen und insbesondere auch zwischen den Teilnetzen. Das Leistungsmodul markiert insbesondere auch eine Grenze zwischen den beiden Subnetzen und trennt diese sozusagen gegeneinander ab. Vorzugsweise sind die beiden Subnetze ausschließlich über das Leistungsmodul miteinander verbunden. Ein Verbraucher ist dagegen insbesondere an wenigstens zwei Teilnetze eines der Subnetze direkt angeschlossen, sodass eine redundante Anbindung realisiert ist. Ein Komfortverbraucher ist dagegen wie die Energiequellen insbesondere an lediglich ein Teilnetz angeschlossen.

Die Ausführungen gelten sinngemäß auch für Ausgestaltungen mit mehreren sicherheitsrelevanten Verbrauchern, welche entweder sämtlich an einem der Subnetze angeschlossen sind oder welche alternativ auf die beiden Subnetze verteilt sind. Ebenso gelten die Ausführungen sinngemäß auch für Ausgestaltungen mit mehr als zwei Subnetzen und auch für Ausgestaltungen, bei welchen mehrere Subnetze jeweils mehrere Teilnetze aufweisen. Nachfolgend wird jedoch ohne Beschränkung der Allgemeinheit zunächst von zwei Subnetzen und zwei Teilnetzen pro Subnetz ausgegangen. Eine solche Ausgestaltung ist auch besonders bevorzugt.

Ein wesentlicher Vorteil der Erfindung ist insbesondere, dass ein jeweiliger sicherheitsrelevanter Verbraucher über zwei getrennte Versorgungsleitungen versorgt wird und dabei über jede der beiden Versorgungsleitungen aus wenigstens zwei unterschiedlichen Energiequellen versorgbar ist. Somit ist die Energieversorgung des Verbrauchers gewissermaßen doppelt redundant, nämlich einmal durch die zwei Versorgungsleitungen und weiter durch die Versorgung aus zwei Energiequellen über jede der beiden Versorgungsleitungen.

Ein weiterer Vorteil besteht insbesondere darin, dass durch die Vielzahl an Möglichkeiten zur Energieversorgung des Verbrauchers ebendieser besonders gut geschützt ist gegen einen Fehlerfall in einem der Subnetze oder einem der Teilnetze oder an einer daran angeschlossenen Komponente, z.B. einem der Energiespeicher.

Besonders bevorzugt, insbesondere im Zusammenhang mit einem Fahrzeug, ist eine Ausgestaltung, bei welcher der Verbraucher an dasjenige der beiden Subnetze angeschlossen ist, welches die höhere Spannungslage aufweist. Falls das erste Subnetz die geringere Spannungslage aufweist, ist der Verbraucher dann an das zweite Subnetz angeschlossen, also an das Subnetz mit der im Vergleich hierzu höheren Spannungslage. Dadurch ist eine Ausgestaltung realisiert, bei welcher ein sicherheitsrelevanter Verbraucher bei der höheren Spannung betrieben wird, sodass dieser Verbraucher einerseits optimal abgesichert ist und andererseits - im Vergleich zu einem entsprechenden Verbraucher bei niedrigerer Spannung - auch vorteilhaft bei geringerem Strom mit einer höheren Leistung versorgt wird.

Besonders vorteilhaft ist auch eine Ausgestaltung, bei welcher das Bordnetz wenigstens zwei sicherheitsrelevante Verbraucher aufweist, welche jeweils auf die oben beschriebene Weise mit zwei Versorgungsleitungen an die beiden Subnetze angeschlossen sind. Mit anderen Worten: das Bordnetz weist einen ersten sicherheitsrelevanten Verbraucher auf, welcher an das erste Subnetz angeschlossen ist, wobei dieses erste Subnetz zwei Teilnetze aufweist und der erste Verbraucher an beide Teilnetze angeschlossen ist, sodass der erste Verbraucher über zwei separate Versorgungsleitungen mit der Energiequelle des ersten Subnetzes verbunden ist. Weiter weist das Bordnetz einen zweiten sicherheitsrelevanten Verbraucher auf, welcher an das zweite Subnetz angeschlossen ist, wobei dieses zweite Subnetz ebenfalls zwei Teilnetze aufweist und der zweite Verbraucher an beide Teilnetze angeschlossen ist, sodass der zweite Verbraucher über zwei separate Versorgungsleitungen mit der Energiequelle des zweiten Subnetzes verbunden ist. Insgesamt ist also in jedem Subnetz, also auf unterschiedlichen Spannungslagen, zumindest ein Verbraucher doppelt redundant mit Energie versorgt.

In einer geeigneten Ausgestaltung weist das erste Subnetz eine Spannungslage von 12 V auf und das zweite Subnetz eine Spannungslage von 48 V und der Verbraucher ist an das zweite Subnetz angeschlossen. Das Bordnetz weist demnach ein 12 V-Subnetz und ein 48 V-Subnetz auf. Der Verbraucher ist ein 48 V-Verbraucher. Wesentlich ist dabei, dass ein sicherheitsrelevanter Verbraucher bei der höheren der beiden Spannungslagen betrieben wird und dabei zugleich besonders optimal redundant abgesichert ist, wie oben bereits allgemeiner beschrieben wurde. Die Werte 12 V und 48 V beziehen sich hierbei insbesondere auf die nominelle Spannung und nicht auf die tatsächliche Spannung, welche typischerweise etwas oberhalb oder unterhalb der nominellen Spannung liegt, z.B. um bis zu 10 % höher oder niedriger.

Die jeweilige Energiequelle ist vorzugsweise ein Elektrospeicher, insbesondere eine Batterie oder ein Supercap, d.h. ein Superkondensator. Als Energiequelle ist auch ein Generator vorteilhaft, d.h. eine E-Maschine, welche als Generator betrieben wird. In einer bevorzugten Ausgestaltung ist an das erste Subnetz ein erster Elektrospeicher als erste Energiequelle angeschlossen. An das zweite Subnetz ist ein zweiter Elektrospeicher als zweite Energiequelle angeschlossen sowie als eine zusätzliche Energiequelle ein Generator, z.B. eine Lichtmaschine des Fahrzeugs. Insgesamt weist das Bordnetz in dieser Ausgestaltung drei Energiequellen auf.

Vorzugsweise sind der Generator und der Elektrospeicher an unterschiedliche Teilnetze des zweiten Subnetzes angeschlossen. Dies ist an sich nicht zwingend, hat aber den Vorteil, dass die beiden Energiequellen des zweiten Subnetzes auf unterschiedliche Teilnetze verteilt sind und bei einem Fehlerfall in einem der Teilnetze potentiell lediglich eine Energiequelle ausfällt, während die andere Energiequelle weiter verwendbar ist. Die Konzepte mit zwei Energiequellen und mit auf unterschiedliche Teilnetze verteilten Energiequellen sind grundsätzlich auch für das erste Subnetz vorteilhaft und auch hierauf anwendbar.

Die beiden Subnetze sind allgemein insbesondere Gleichspannungsnetze. Das Leistungsmodul verbindet die beiden Subnetze und somit auch unterschiedliche Spannungslagen, welche mittels des Leistungsmoduls entsprechend umgewandelt werden. Bevorzugterweise weist das Leistungsmodul wenigstens einen Gleichspannungswandler auf, über welchen die beiden Subnetze miteinander verbunden sind, zur Versorgung des einen Subnetzes mit Energie aus dem anderen Subnetz und umgekehrt. Der Gleichspannungswandler dient demnach der Umwandlung der Spannungslagen. In der Ausgestaltung mit einem 48 V-Subnetz und einem 12 V-Subnetz ist der Gleichspannungswandler demnach ein 48 V/12 V-Wandler. Der Gleichspannungswandler stellt zudem eine Grenze zwischen dem ersten und dem zweiten Subnetz dar.

Vorliegend weisen beide Subnetze jeweils zwei Teilnetze auf und das Leistungsmodul weist zwei insbesondere gleichartige Gleichspannungswandler auf. Ein erster der beiden Gleichspannungswandler verbindet ein erstes Teilnetz des ersten Subnetzes mit einem ersten Teilnetz des zweiten Subnetzes. Ein zweiter der beiden Gleichspannungswandler verbindet dann analog ein zweites Teilnetz des ersten Subnetzes mit einem zweiten Teilnetz des zweiten Subnetzes. Somit sind je zwei Teilnetze aus unterschiedlichen Subnetzen über einen Gleichspannungswandler verbunden. Insofern ist das Leistungsmodul hinsichtlich der Gleichspannungswandler vorteilhaft redundant ausgebildet. Da die Teilnetze eines Subnetzes auch untereinander verbunden sind, kann selbst bei einem Fehlerfall eines der Gleichspannungswandler weiterhin jedes Teilnetz und jeder daran angeschlossene Verbraucher aus jedem anderen Teilnetz, an welches eine Energiequelle angeschlossen ist, versorgt werden. Die beiden Gleichspannungswandler stellen auch eine Grenze zwischen dem ersten und dem zweiten Subnetz dar.

Zweckmäßigerweise dienen die Gleichspannungswandler zugleich jeweils als Schalter, um im Fehlerfall die daran angeschlossenen Subnetze elektrisch voneinander zu trennen.

In einer vorteilhaften Ausgestaltung weisen die beiden Subnetze jeweils zwei Teilnetze auf und die beiden Teilnetze des ersten Subnetzes sind über einen ersten Schalter trennbar miteinander verbunden. Analog sind hierbei auch die beiden Teilnetze des zweiten Subnetzes über einen zweiten Schalter trennbar miteinander verbunden. Die Schalter dienen insbesondere zum Abtrennen eines jeweiligen Teilnetzes im Fehlerfall, d.h. falls in einem der Teilnetze ein Fehlerfall auftritt, wird dieses Teilnetz dadurch von den übrigen Teilnetzen getrennt, dass der entsprechende Schalter geöffnet wird. Im Übrigen, d.h. im Normalbetrieb und ohne Fehlerfall, sind die Schalter dagegen geschlossen, um die Teilnetze entsprechend miteinander zu verbinden und eine vorteilhafte Redundanz zu gewährleisten. Die Schalter sind jeweils beispielsweise als Halbleiterschalter ausgebildet oder alternativ als Relais oder als Schütz.

Vorzugsweise sind die beiden Schalter in das Leistungsmodul integriert, d.h. die Schalter sind jeweils Bauteile des Leistungsmoduls. Insgesamt sind dann die Schalter und die Gleichspannungswandler vorteilhaft im Leistungsmodul zusammengefasst, sodass die gesamte Verbindung der Teilnetze besonders kompakt ist und auch räumlich konzentriert, d.h. an einem einzelnen Ort im Fahrzeug unterbringbar ist und vorzugsweise auch untergebracht ist. Die Komponenten des Leistungsmoduls sind also gerade nicht über das Fahrzeug verteilt angeordnet.

Besonders bevorzugt ist eine Kombination der Ausgestaltung mit zwei Schaltern mit der Ausgestaltung mit zwei Gleichspannungswandlern. Dies ergibt ein Leistungsmodul mit einem besonders hohen Integrationsgrad. Die Schalter verbinden hierbei die Teilnetze innerhalb eines jeweiligen Subnetzes, während die Gleichspannungswandler die Subnetze miteinander verbinden. Durch entsprechendes Umschalten der Schalter und der Gleichspannungswandler lassen sich dann die Teilnetze nahezu beliebig miteinander verbinden, für eine maximale Redundanz, und im Fehlerfall besonders flexibel voneinander trennen. Bei zwei Subnetzen mit je zwei Teilnetzen verbindet dann der erste Schalter die Teilnetze des ersten Subnetzes, der zweite Schalter die Teilnetze des zweiten Subnetzes, der erste Gleichspannungswandler verbindet die beiden ersten Teilnetze der beiden Subnetze und der zweite Gleichspannungswandler verbindet die beiden zweiten Teilnetze der beiden Subnetze.

Insgesamt ergibt sich somit eine besonders kompakte Ausgestaltung, da die gesamte Verbindung der Teilnetze und Subnetze miteinander und somit auch die redundante Versorgung des Verbrauchers durch das Leistungsmodul realisiert ist. Die doppelt redundante Versorgung eines sicherheitsrelevanten Verbrauchers wird vorzugsweise vollständig durch das Leistungsmodul realisiert, alle hierbei verwendeten Funktionen sind zweckmäßigerweise in das Leistungsmodul integriert. Eine Funktion ist insbesondere ein bedarfsweises Anpassen der Spannung, um den Verbraucher in dem einen Subnetz mit Energie aus dem anderen Subnetz zu versorgen. Hierzu weist das Leistungsmodul wie beschrieben ein oder mehrere Gleichspannungswandler auf. Eine andere Funktion ist insbesondere, die Subnetze und insbesondere deren Teilnetze je nach Bedarf miteinander zu verbinden oder voneinander zu trennen. Hierzu weist das Leistungsmodul wie beschrieben einen oder mehrere Schalter auf. Das Leistungsmodul ist selbst besonders kompakt und ist im Fahrzeug beispielsweise anstelle einer 12 V-Batterie im Motorraum installiert oder in einer Reserveradmulde im Kofferraum. Das Leistungsmodul weist einen besonders hohen Integrationsgrad auf.

Bevorzugterweise weist das Leistungsmodul für jedes Teilnetz einen eigenen Anschluss auf, sodass die Teilnetze eines Subnetzes lediglich über das Leistungsmodul und an den Verbrauchern miteinander verbunden sind. Die Anschlüsse sind jeweils als Pol ausgebildet, an welchen außerhalb des Leistungsmoduls die Verbraucher, Komfortverbraucher und Energiequellen des jeweiligen Teilnetzes angeschlossen sind. Die Anschlüsse für ein jeweiliges Subnetz sind insbesondere über einen Schalter wie oben beschrieben verbunden. Zwischen den Anschlüssen unterschiedlicher Subnetze ist ein Gleichspannungswandler wie oben beschrieben angeordnet. Bei zwei Subnetzen mit je zwei Teilnetzen weist das Leistungsmodul insgesamt vier Anschlüsse auf. Außerhalb des Leistungsmoduls sind die beiden Subnetze miteinander vorzugsweise nicht verbunden. Auch die Teilnetze sind in einer vorteilhaften Ausgestaltung außerhalb des Leistungsmoduls nicht miteinander verbunden.

Für die Anordnung einer jeweiligen Energiequelle existieren grundsätzlich zwei verschiedene Varianten, welche beide vorteilhaft und bevorzugt sind. In einer ersten Variante ist die Energiequelle außerhalb des Leistungsmoduls angeordnet und separat hierzu ausgebildet, wodurch sich eine entsprechende Flexibilität ergibt. In einer zweiten Variante ist dagegen die Energiequelle in das Leistungsmodul integriert, wodurch sich eine besonders kompakte Ausgestaltung ergibt. In einer besonders bevorzugten Ausgestaltung ist zumindest eine Energiequelle jeweils des ersten und des zweiten Subnetzes als Elektrospeicher, d.h. beispielsweise als Batterie oder Supercap, ausgebildet und in das Leistungsmodul integriert. Das Leistungsmodul stellt also für jedes der beiden Subnetze bereits eine Energiequelle in Form eines Elektrospeichers bereit, sodass ein solcher nicht noch zusätzlich extern angeschlossen werden muss. Dadurch ist ein besonders hohes Maß an Integration erreicht. Zweckmäßigerweise ist jedoch extern - wie oben beschrieben - ein Generator angeschlossen, um die beiden Elektrospeicher zu laden.

In einer geeigneten Ausgestaltung weist das Bordnetz wenigstens einen Komfortverbraucher auf, welcher nicht sicherheitsrelevant ist und welcher über lediglich eine Versorgungsleitung an eine der Energiequellen angeschlossen ist. Der Komfortverbraucher ist also gerade nicht redundant angeschlossen, sondern lediglich an eines der Teilnetze von lediglich einem der Subnetze.

Die Aufgabe wird weiterhin gelöst durch ein Fahrzeug, welches ein Bordnetz oder ein Leistungsmodul wie oben beschrieben aufweist. Die Aufgabe wird auch gelöst durch die Verwendung eines Leistungsmoduls wie oben beschrieben in einem Bordnetz sowie durch die Verwendung eines Leistungsmoduls oder eines Bordnetzes wie oben beschrieben in einem Fahrzeug.

Die Aufgabe wird insbesondere auch gelöst durch ein Verfahren zum Betrieb eines Leistungsmoduls oder eines Bordnetzes, wobei zur Trennung der beiden Teilnetze eines Subnetzes, z.B. in einem Fehlerfall in einem der Teilnetze, ein Schalter, welcher die beiden Teilnetze in einem Normalbetrieb elektrisch verbindet, geöffnet wird, sodass die beiden Teilnetze dann elektrisch voneinander getrennt sind. Die obigen Ausführungen zum Bordnetz und zum Leistungsmodul gelten sinngemäß auch für das Verfahren. Insbesondere ergeben sich vorteilhafte Verfahrensschritte sinngemäß aus den bisherigen Ausführungen zum Verhalten des Bordnetzes und des Leistungsmoduls.

Nachfolgend werden Ausführungsbeispiele der Erfindung anhand einer Zeichnung näher erläutert. Darin zeigen jeweils schematisch:
Fig. 1 ein Fahrzeug mit einem Bordnetz,
Fig. 2 eine erste Variante des Bordnetzes aus Fig. 1,
Fig. 3 eine zweite Variante des Bordnetzes aus Fig. 1.

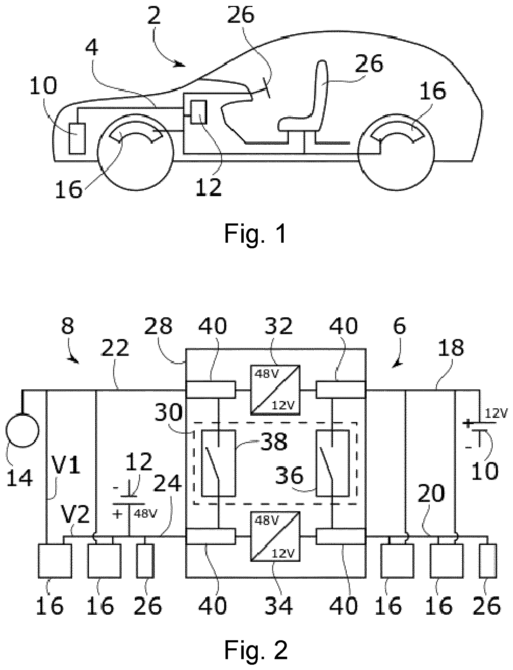

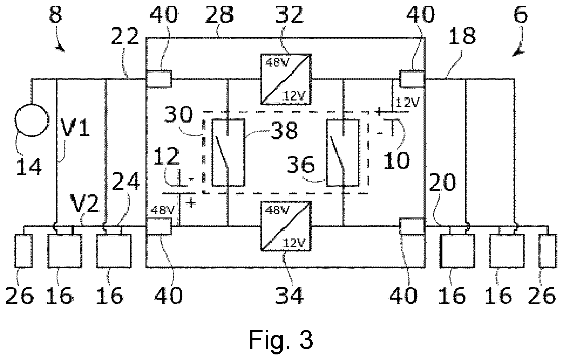

In Fig. 1 ist ein Fahrzeug 2 gezeigt, welches ein Bordnetz 4 aufweist, welches lediglich stark schematisiert durch Verbindungslinien zwischen mehreren Komponenten des Fahrzeugs 2 angedeutet ist. Das Fahrzeug 2 ist ein Kraftfahrzeug, z.B. ein PKW oder LKW und beispielsweise elektrisch oder verbrennungsmotorisch angetrieben oder beides. In Fig. 2 ist ein Ausführungsbeispiel einer ersten Variante des Bordnetzes 4 näher gezeigt, in Fig. 3 ist ein Ausführungsbeispiel einer zweiten Variante näher gezeigt.

Das Bordnetz 4 weist allgemein ein erstes Subnetz 6 und ein zweites Subnetz 8 auf, an welche jeweils wenigstens eine Energiequelle 10, 12, 14 angeschlossen ist. Das erste Subnetz 6 weist eine andere, vorliegend eine geringere Spannungslage auf als das zweite Subnetz 8. An das erste Subnetz 6 ist zumindest eine erste Energiequelle 10 angeschlossen und an das zweite Subnetz 8 zumindest eine zweite Energiequelle 12. Die Energiequelle 10, 12, 14 des jeweiligen Subnetzes 6, 8 legt dessen Spannungslage fest. In den gezeigten Ausführungsbeispielen beträgt die Spannungslage des ersten Subnetzes 6 12 V und die Spannungslage des zweiten Subnetzes 8 beträgt 48 V, grundsätzlich sind aber auch andere Spannungen möglich und geeignet.

Das Bordnetz 4 weist wenigstens einen und hier beispielhaft vier sicherheitsrelevante Verbraucher 16 auf, welche jeweils an eines der Subnetze 6, 8 angeschlossen sind. Dabei weist jedes Subnetz 6, 8 zwei Teilnetze 18, 20, 22, 24 auf und ein jeweiliger Verbraucher 16 ist an beide Teilnetze 18, 20, 22, 24 eines einzelnen Subnetzes 6, 8 angeschlossen, sodass der Verbraucher 16 über zwei separate Versorgungsleitungen V1, V2 mit der Energiequelle 10, 12, 14 des entsprechenden Subnetzes 6, 8 verbunden ist. Dies ist in den Fig. 2 und 3 exemplarisch für einen der Verbraucher 16 gezeigt, wie jedoch deutlich wird, sind alle vier Verbraucher 16 jeweils separat über zwei Verbindungsleitungen V1, V2 angeschlossen. Die jeweilige Energiequelle 10, 12, 14 ist an lediglich eines der Teilnetze 18, 20, 22, 24 angeschlossen, die beiden Teilnetze 18, 20, 22, 24 eines jeweiligen Subnetzes 6, 8 sind jedoch derart miteinander verbunden, dass beide Teilnetze 18, 20, 20, 24 von der zugehörigen Energiequelle 10, 12, 14 versorgt werden. Somit ist jedes der beiden Subnetze 6, 8 in zwei Teilnetze 18, 20, 22, 24 unterteilt, welche beide je eine der Versorgungsleitungen V1, V2 umfassen, sodass der Verbraucher 16 über unterschiedliche Teilnetze 18, 20, 22, 24 mit Energie versorgbar ist, d.h. redundant mit der Energiequelle 10, 12, 14 verbunden ist. Ein oder mehrere gegebenenfalls vorhandene Komfortverbraucher 26 sind demgegenüber jeweils lediglich an ein einzelnes Teilnetz 18, 20, 22, 24 angeschlossen, werden also gerade nicht redundant versorgt.

Die sicherheitsrelevanten Verbraucher 16 erfüllen jeweils eine sicherheitsrelevante Funktion und dienen dazu, die Sicherung und die Unversehrtheit des Fahrzeugs 2 oder einer oder mehrerer Insassen eines Fahrzeugs 2 oder anderer Verkehrsteilnehmer zuverlässig und betriebssicher zu gewährleisten. Sicherheitsrelevante Verbraucher eines Fahrzeugs sind beispielsweise wie in Fig. 1 gezeigt ein Bremssystem oder eine Lenkung oder in einer nicht gezeigten Variante alternativ oder zusätzlich eine Wankstabilisierung, ein Antriebssystem, eine Fahrwerksteuerung, ein Airbag, ein System zur Sicherstellung der Fahrzeugstabilität und dergleichen. Sicherheitsrelevante Verbraucher 16 sind abzugrenzen von Komfortverbrauchern 26, welcher gerade keine sicherheitsrelevante Funktion erfüllen, sondern lediglich eine oder mehrere Komfortfunktionen. Beispiele für Komfortverbraucher 26 sind eine Sitzverstellung wie in Fig. 1 erkennbar oder alternativ oder zusätzlich eine Klimaanlage, ein Audiosystem oder dergleichen.

Das Bordnetz 4 weist weiter ein Leistungsmodul 28 auf, welches die beiden Subnetze 6, 8 miteinander verbindet und welches derart ausgebildet ist, dass jede der beiden Versorgungsleitungen V1, V2 mit sämtlichen Energiequellen 10, 12, 14 verbindbar ist, sodass der Verbraucher 16 über beide Versorgungsleitungen V1, V2 jeweils aus allen Energiequellen 10, 12, 14 versorgbar ist. Der Verbraucher 16 ist also nicht lediglich redundant mit einer einzelnen Energiequelle 10, 12, 14 im gleichen Subnetz 6, 8 verbunden, sondern ist auch mit einer oder mehreren Energiequellen 10, 12, 14 aus dem anderen Subnetz 6, 8 verbunden. Zusätzlich zur Redundanz der Verbindung ist demnach auch eine Redundanz der Energieversorgung realisiert.

Das Leistungsmodul 28 dient insgesamt der Verteilung der elektrischen Energie der Energiequellen 10, 12, 14 auf die diversen Subnetze 6, 8 und Teilnetze 18, 20, 22, 24 und gewährleistet somit die beschriebene Redundanz der Energieversorgung des Verbrauchers 16. Das Leistungsmodul 28 ist in den gezeigten Ausführungsbeispielen eine elektrische Schaltung, welche hier eine Platine 30 aufweist, auf welcher geeignete Bauteile zur Realisierung der Funktionalität des Leistungsmoduls 28 angeordnet und miteinander verschaltet sind.

Eine jeweilige Energiequelle 10, 12, 14 ist direkt lediglich an eines der Subnetze 6, 8 angeschlossen und mit dem anderen Subnetz 6, 8 lediglich mittelbar über das Leistungsmodul 28 verbunden. Gleiches gilt analog für die Verbraucher 16 und auch für die Komfortverbraucher 26, welche jeweils direkt lediglich an das eine Subnetz 6, 8 angeschlossen sind, an das andere Subnetz 6, 8 jedoch lediglich mittelbar über das Leistungsmodul 28. Eine jeweilige Energiequelle 10, 12, 14 ist zudem auch lediglich an eines der Teilnetze 18, 20, 22, 24 angeschlossen und mit den übrigen Teilnetzen 18, 20, 22, 24 daher lediglich mittelbar verbunden, nämlich über das Leistungsmodul 28. Ein jeweiliger Verbraucher 16 ist dagegen an wenigstens zwei Teilnetze 18, 20, 22, 24 eines der Subnetze 6, 8 direkt angeschlossen, sodass eine redundante Anbindung realisiert ist. Ein jeweiliger Komfortverbraucher 26 ist dagegen an lediglich ein Teilnetz 18, 20, 22, 24 angeschlossen.

Wie bereits beschrieben weist das erste Subnetz 6 in den Fig. 2 und 3 eine Spannungslage von 12 V auf und das zweite Subnetz 8 eine demgegenüber höhere Spannungslage von 48 V. Eine Besonderheit ist, dass zumindest ein sicherheitsrelevanter Verbraucher 16 an das zweite Subnetz 8 angeschlossen ist und mit der höheren Spannung betrieben wird und dabei redundant mit Energie versorgt wird. Dies ist grundsätzlich unabhängig davon welche und wie viele Verbraucher 16 und Komfortverbraucher 26 an das erste Subnetz 6 bei 12 V angeschlossen sind und wie die Energiequellen 10, 12, 14 verteilt sind.

Die Energiequellen 10, 12 sind vorliegend jeweils als Elektrospeicher ausgebildet, hier sogar als Batterie. Alternativ ist auch eine Ausgestaltung als Supercap geeignet. Als Energiequelle 14 ist auch ein Generator geeignet. In den gezeigten Ausführungsbeispielen ist an das erste Subnetz 6 ein erster Elektrospeicher als erste Energiequelle 10 angeschlossen und an das zweite Subnetz 8 ist ein zweiter Elektrospeicher als zweite Energiequelle 12 angeschlossen sowie als eine zusätzliche Energiequelle 14 ein Generator, sodass die gezeigten Bordnetze 4 jeweils drei Energiequellen 10, 12, 14 aufweisen. Alternativen mit einer anderen Anzahl an und Verteilung von Energiequellen 10, 12, 14 sind grundsätzlich möglich und auch geeignet, sofern an jedes der Subnetze 6, 8 wenigstens eine Energiequelle 10, 12, 14 angeschlossen ist, sodass wenigsten eine Energiequelle 10, 12, 14 pro Subnetz 6, 8 vorhanden ist.

In den Ausführungsbeispielen der Fig. 2 und 3 sind der Generator 14 und der zweite Elektrospeicher 12 an unterschiedliche Teilnetze 22, 24 des zweiten Subnetzes 8 angeschlossen. Dies ist an sich nicht zwingend, hat aber den Vorteil, dass die beiden Energiequellen 12, 14 des zweiten Subnetzes 8 auf unterschiedliche Teilnetze 22, 24 verteilt sind und bei einem Fehlerfall in einem der Teilnetze 22, 24 potentiell lediglich eine Energiequelle 12, 14 ausfällt, während die andere weiter verwendbar ist. Dieses Konzept ist analog auch auf das erste Subnetz 6 anwendbar.

Das Leistungsmodul 28 verbindet die beiden Subnetze 6, 8 und somit auch unterschiedliche Spannungslagen. Zur Versorgung des einen Subnetzes 6, 8 mit Energie aus dem anderen Subnetz 6, 8 und umgekehrt weist das Leistungsmodul 28 wenigstens einen und hier zwei Gleichspannungswandler 32, 34 auf, über welche die beiden Subnetze 6, 8 miteinander verbunden sind. Die Gleichspannungswandler 32, 34 dienen der Umwandlung der Spannungslagen und sind hier konkret jeweils als 48 V/12 V-Wandler ausgebildet. Die Gleichspannungswandler 32, 34 stellen auch eine Grenze zwischen den beiden Subnetzen 6, 8 dar.

Bei den Ausgestaltungen gemäß den Fig. 2 und 3 weist das erste Subnetz 6 ein erstes Teilnetz 18 und ein zweites Teilnetz 20 auf, das zweite Subnetz 8 weist ebenfalls ein erstes Teilnetz 22 und ein zweites Teilnetz 24 auf. Der erste Gleichspannungswandler 32 verbindet das erste Teilnetz 18 des ersten Subnetzes 6 mit dem ersten Teilnetz 22 des zweiten Subnetzes 8. Der zweite Gleichspannungswandler 34 verbindet analog das zweite Teilnetz 20 des ersten Subnetzes 6 mit dem zweiten Teilnetz 24 des zweiten Subnetzes 8. Somit sind einerseits die ersten Teilnetze 18, 22 sowie die zweiten Teilnetze 20, 24 über einen jeweiligen Gleichspannungswandler 32, 34 verbunden. Da die Teilnetze 18, 20, 22, 24 eines Subnetzes 6, 8 auch untereinander verbunden sind, kann selbst bei einem Fehlerfall eines der Gleichspannungswandler 32, 34 weiterhin jedes Teilnetz 18, 20, 22, 24 und jeder daran angeschlossene Verbraucher 16 aus jedem anderen Teilnetz 18, 20, 22, 24, an welches eine Energiequelle 10, 12, 14 angeschlossen ist, versorgt werden.

Die beiden Teilnetze 18, 20 des ersten Subnetzes 6 sind über einen ersten Schalter 36 trennbar miteinander verbunden. Analog sind auch die beiden Teilnetze 22, 24 des zweiten Subnetzes 8 über einen zweiten Schalter 38 trennbar miteinander verbunden. Die Schalter 36, 38 dienen zum Abtrennen eines jeweiligen Teilnetzes 18, 20, 22, 24 im Fehlerfall, indem der entsprechende Schalter 36, 38 geöffnet wird. Im Übrigen, d.h. im Normalbetrieb und ohne Fehlerfall, sind die Schalter 36, 38 dagegen geschlossen. In den gezeigten Ausführungsbeispielen sind die beiden Schalter 36, 38 in das Leistungsmodul 28 integriert, nämlich auf der Platine 30. In einer nicht gezeigten Variante sind auch die Gleichspannungswandler 32, 34 auf der Platine 30 montiert.

Wie aus den Fig. 2 und 3 deutlich wird verbinden die Schalter 36, 38 ein jeweiliges erstes Teilnetz 18, 22 mit dem zugehörigen zweiten Teilnetz 20, 24 innerhalb desselben Subnetzes 6, 8, während die Gleichspannungswandler 32, 34 die unterschiedlichen Subnetze 6, 8 miteinander verbinden. Durch entsprechendes Umschalten der Schalter 36, 38 und der Gleichspannungswandler 32, 34 lassen sich die Teilnetze 18, 20, 22, 24 nahezu beliebig miteinander verbinden und voneinander trennen.

Vorliegend weist das Leistungsmodul 28 für jedes Teilnetz 18, 20, 22, 24 einen eigenen Anschluss 40 auf, hier also vier Anschlüsse 40. Dadurch sind die Teilnetze 18, 20, 22, 24 eines Subnetzes 6, 8 lediglich über das Leistungsmodul 28 und an den Verbrauchern 16 miteinander verbunden. Die Anschlüsse 40 sind jeweils als Pol ausgebildet, an welchen außerhalb des Leistungsmoduls 28 die Verbraucher 16, Komfortverbraucher 26 und Energiequellen 10, 12, 14 des jeweiligen Teilnetzes 18, 20, 22, 24 angeschlossen sind. Die Anschlüsse 40 eines jeweiligen Subnetzes 6, 8 sind über einen der Schalter 36, 38 verbunden. Zwischen zwei Anschlüssen 40 unterschiedlicher Subnetze 6, 8 ist dagegen einer der Gleichspannungswandler 32, 34 angeordnet.

Eine jeweilige Energiequelle 10, 12, 14 wird entweder außerhalb des Leistungsmoduls 28 und separat hierzu angeordnet, wie in Fig. 2 gezeigt, oder alternativ in das Leistungsmodul 28 integriert, wie in Fig. 3 gezeigt. Speziell in Fig. 3 sind die als Elektrospeicher ausgebildeten Energiequellen 10, 12 in das Leistungsmodul 28 integriert, der Generator 14 ist dagegen wie in Fig. 2 außerhalb des Leistungsmoduls 28 angeordnet. Das Leistungsmodul 28 der Fig. 3 weist somit für jedes der beiden Subnetze 6, 8 eine Energiequelle 10, 12 in Form eines Elektrospeichers auf, sodass ein solcher nicht noch zusätzlich extern angeschlossen werden muss.

### Bezugszeichenliste

- 2: Fahrzeug
- 4: Bordnetz
- 6: erstes Subnetz (12 V)
- 8: zweites Subnetz (48 V)
- 10: erste Energiequelle, erster Elektrospeicher
- 12: zweite Energiequelle, zweiter Elektrospeicher
- 14: Energiequelle, Generator
- 16: sicherheitsrelevanter Verbraucher
- 18: erstes Teilnetz (im ersten Subnetz)
- 20: zweites Teilnetz (im ersten Subnetz)
- 22: erstes Teilnetz (im zweiten Subnetz)
- 24: zweites Teilnetz (im zweiten Subnetz)
- 26: Komfortverbraucher
- 28: Leistungsmodul
- 30: Platine
- 32: erster Gleichspannungswandler
- 34: zweiter Gleichspannungswandler
- 36: erster Schalter
- 38: zweiter Schalter
- 40: Anschluss

- V1, V2: Verbindungsleitung

## Patentansprüche

1. Bordnetz (4),
- welches ausgebildet ist zur Verwendung in einem Fahrzeug (2),
- welches ein erstes Subnetz (6) und ein zweites Subnetz (8) aufweist, an welche jeweils wenigstens eine Energiequelle (10, 12, 14) angeschlossen ist, wobei das erste Subnetz (6) eine andere Spannungslage aufweist als das zweite Subnetz (8),
- welches wenigstens einen sicherheitsrelevanten Verbraucher (16) aufweist, welcher an eines der Subnetze (6, 8) angeschlossen ist, wobei dieses Subnetz (6, 8) zwei Teilnetze (18, 20, 22, 24) aufweist und der Verbraucher (16) an beide Teilnetze (18, 20, 22, 24) angeschlossen ist, sodass der Verbraucher (16) über zwei separate Versorgungsleitungen (V1, V2) mit der Energiequelle (10, 12, 14) des Subnetzes (6, 8) verbunden ist,
- welches ein Leistungsmodul (28) aufweist, welches die beiden Subnetze (6, 8) miteinander verbindet und welches derart ausgebildet ist, dass jede der beiden Versorgungsleitungen (V1, V2) mit beiden Energiequellen (10, 12, 14) verbindbar ist, sodass der Verbraucher (16) über beide Versorgungsleitungen (V1, V2) jeweils aus beiden Energiequellen (10, 12, 14) versorgbar ist,
**dadurch gekennzeichnet,**
- **dass** beide Subnetze (6, 8) jeweils zwei Teilnetze (18, 20, 22, 24) aufweisen und wobei das Leistungsmodul (28) zwei Gleichspannungswandler (32, 34) aufweist, welche eine Grenze zwischen dem ersten und dem zweiten Subnetz (6, 8) darstellen,
- **dass** ein erster der beiden Gleichspannungswandler (32) ein erstes Teilnetz (18) des ersten Subnetzes (6) mit einem ersten Teilnetz (22) des zweiten Subnetzes (8) verbindet,
- **dass** ein zweiter der beiden Gleichspannungswandler (34) ein zweites Teilnetz (20) des ersten Subnetzes (6) mit einem zweiten Teilnetz (24) des zweiten Subnetzes (8) verbindet, sodass je zwei Teilnetze (18, 20, 22, 24) aus unterschiedlichen Subnetzen (6, 8) über einen Gleichspannungswandler (32, 34) verbunden sind.

2. Bordnetz (4) nach Anspruch 1,
wobei die Energiequelle (10, 12, 14) eines jeweiligen Subnetzes (6, 8) direkt lediglich an ebenjenes Subnetz (6, 8) angeschlossen ist und mit dem anderen Subnetz (6, 8) lediglich mittelbar über das Leistungsmodul (28) verbunden ist,
wobei der Verbraucher (16) direkt lediglich an das eine Subnetz (6, 8) angeschlossen ist und an das andere Subnetz (6, 8) lediglich mittelbar über das Leistungsmodul (28).

3. Bordnetz (4) nach einem der Ansprüche 1 oder 2,
wobei das erste Subnetz (6) eine geringere Spannungslage aufweist als das zweite Subnetz (8).

4. Bordnetz (4) nach einem der Ansprüche 1 bis 3,
wobei der Verbraucher (16) an dasjenige der beiden Subnetze (6, 8) angeschlossen ist, welches die höhere Spannungslage aufweist.

5. Bordnetz (4) nach einem der Ansprüche 1 bis 4,
wobei das erste Subnetz (6) eine Spannungslage von 12 V aufweist und das zweite Subnetz (8) eine Spannungslage von 48 V und wobei der Verbraucher (16) an das zweite Subnetz (8) angeschlossen ist.

6. Bordnetz (4) nach einem der Ansprüche 1 bis 5,
wobei an das erste Subnetz (6) ein erster Elektrospeicher als erste Energiequelle (10) angeschlossen ist und
wobei an zweite Subnetz (8) ein zweiter Elektrospeicher als zweite Energiequelle (12) angeschlossen ist und ein Generator als eine zusätzliche Energiequelle (14).

7. Bordnetz (4) nach Anspruch 6,
wobei der Generator (14) und der zweite Elektrospeicher (12) an unterschiedliche Teilnetze (22, 24) des zweiten Subnetzes (8) angeschlossen sind.

8. Bordnetz (4) nach einem der Ansprüche 1 bis 7,
wobei das Leistungsmodul (28) wenigstens einen Gleichspannungswandler (32, 34) aufweist, über welchen die beiden Subnetze (6, 8) miteinander verbunden sind, zur Versorgung des einen Subnetzes (6, 8) mit Energie aus dem anderen Subnetz (6, 8) und umgekehrt.

9. Bordnetz (4) nach einem der Ansprüche 1 bis 8,
wobei die beiden Subnetze (6, 8) jeweils zwei Teilnetze (18, 20, 22, 24) aufweisen,
wobei die beiden Teilnetze (18, 20) des ersten Subnetzes (6) über einen ersten Schalter (36) trennbar miteinander verbunden sind, und
wobei die beiden Teilnetze (22, 24) des zweiten Subnetzes (8) über einen zweiten Schalter (38) trennbar miteinander verbunden sind.

10. Bordnetz (4) nach Anspruch 9,
wobei die beiden Schalter (36, 38) in das Leistungsmodul (28) integriert sind.

11. Bordnetz (4) nach einem der Ansprüche 1 bis 10,
wobei das Leistungsmodul (28) für jedes Teilnetz (18, 20, 22, 24) einen eigenen Anschluss (40) aufweist.

12. Bordnetz (4) nach einem der Ansprüche 1 bis 11,
wobei zumindest eine Energiequelle (10, 12, 14) jeweils des ersten Subnetzes (6) und des zweiten Subnetzes (8) als Elektrospeicher ausgebildet ist und in das Leistungsmodul (28) integriert ist.

13. Bordnetz (4) nach einem der Ansprüche 1 bis 12,
wobei dieses wenigstens einen Komfortverbraucher (26) aufweist, welcher nicht sicherheitsrelevant ist und welcher über lediglich eine Versorgungsleitung an eine der Energiequellen (10, 12, 14) angeschlossen ist.

## Claims

1. Vehicle electrical system (4)
- which is designed for use in a vehicle (2),
- which has a first subnetwork (6) and a second subnetwork (8), to each of which at least one energy source (10, 12, 14) is connected, wherein the first subnetwork (6) has a different voltage level than the second subnetwork (8),
- which has at least one safety-relevant consumer (16) connected to one of the subnetworks (6, 8), wherein this subnetwork (6, 8) has two partial networks (18, 20, 22, 24) and the consumer (16) is connected to both partial networks (18, 20, 22, 24), such that the consumer (16) is connected to the energy source (10, 12, 14) of the subnetwork (6, 8) via two separate supply lines (V1, V2),
- which has a power module (28) which connects the two subnetworks (6, 8) to each other and is designed in such a way that each of the two supply lines (V1, V2) can be connected to both energy sources (10, 12, 14), such that the consumer (16) can be respectively supplied from both energy sources (10, 12, 14) via both supply lines (V1, V2),
**characterized**
- **in that** both subnetworks (6, 8) each have two partial networks (18, 20, 22, 24), wherein the power module (28) has two DC-DC converters (32, 34) which represent a boundary between the first and the second subnetwork (6, 8),
- **in that** a first of the two DC-DC converters (32) connects a first partial network (18) of the first subnetwork (6) to a first partial network (22) of the second subnetwork (8),
- **in that** a second of the two DC-DC converters (34) connects a second partial network (20) of the first subnetwork (6) to a second partial network (24) of the second subnetwork (8), such that two partial networks (18, 20, 22, 24) each from different subnetworks (6, 8) are connected via a DC-DC converter (32, 34).

2. Vehicle electrical system (4) according to Claim 1, wherein the energy source (10, 12, 14) of a respective subnetwork (6, 8) is directly connected only to that same subnetwork (6, 8) and is connected to the other subnetwork (6, 8) only indirectly via the power module (28),
wherein the consumer (16) is directly connected only to one subnetwork (6, 8) and is connected to the other subnetwork (6, 8) only indirectly via the power module (28).

3. Vehicle electrical system (4) according to either of Claims 1 and 2,
wherein the first subnetwork (6) has a lower voltage level than the second subnetwork (8).

4. Vehicle electrical system (4) according to one of Claims 1 to 3,
wherein the consumer (16) is connected to that one of the two subnetworks (6, 8) which has the higher voltage level.

5. Vehicle electrical system (4) according to one of Claims 1 to 4,
wherein the first subnetwork (6) has a voltage level of 12 V and the second subnetwork (8) has a voltage level of 48 V, and wherein the consumer (16) is connected to the second subnetwork (8).

6. Vehicle electrical system (4) according to one of Claims 1 to 5,
wherein a first electrical storage device is connected to the first subnetwork (6) as a first energy source (10), and
wherein a second electrical storage device is connected to the second subnetwork (8) as a second energy source (12) and a generator is connected as an additional energy source (14).

7. Vehicle electrical system (4) according to Claim 6, wherein the generator (14) and the second electrical storage device (12) are connected to different partial networks (22, 24) of the second subnetwork (8).

8. Vehicle electrical system (4) according to one of Claims 1 to 7,
wherein the power module (28) has at least one DC-DC converter (32, 34), via which the two subnetworks (6, 8) are connected to each other, for the purpose of supplying one subnetwork (6, 8) with energy from the other subnetwork (6, 8) and vice versa.

9. Vehicle electrical system (4) according to one of Claims 1 to 8,
wherein the two subnetworks (6, 8) each have two partial networks (18, 20, 22, 24),
wherein the two partial networks (18, 20) of the first subnetwork (6) are separably connected to each other via a first switch (36), and
wherein the two partial networks (22, 24) of the second subnetwork (8) are separably connected to each other via a second switch (38).

10. Vehicle electrical system (4) according to Claim 9, wherein the two switches (36, 38) are integrated in the power module (28).

11. Vehicle electrical system (4) according to one of Claims 1 to 10,
wherein the power module (28) has a separate connection (40) for each partial network (18, 20, 22, 24).

12. Vehicle electrical system (4) according to one of Claims 1 to 11,
wherein at least one energy source (10, 12, 14) of each of the first subnetwork (6) and the second subnetwork (8) is in the form of an electrical storage device and is integrated in the power module (28).

13. Vehicle electrical system (4) according to one of Claims 1 to 12,
wherein this has at least one comfort consumer (26) which is not safety-relevant and which is connected to one of the energy sources (10, 12, 14) via only one supply line.

## Revendications

1. Réseau de bord (4),
- lequel est configuré pour être utilisé dans un véhicule (2),
- lequel possède premier sous-réseau (6) et un deuxième sous-réseau (8) auxquels est respectivement raccordée au moins une source d'énergie (10, 12, 14), le premier sous-réseau (6) présentant une tension différente de celle du deuxième sous-réseau (8),
- lequel possède au moins un consommateur (16) pertinent pour la sécurité, lequel est raccordé à l'un des sous-réseaux (6, 8), ce sous-réseau (6, 8) possédant deux réseaux partiels (18, 20, 22, 24) et le consommateur (16) étant raccordé aux deux réseaux partiels (18, 20, 22, 24), de sorte que le consommateur (16) est relié à la source d'énergie (10, 12, 14) du réseau partiel (6, 8) par l'intermédiaire de deux lignes d'alimentation (V1, V2) séparées,
- lequel possède un module de puissance (28), lequel relie les deux sous-réseaux (6, 8) entre eux et lequel est configuré de telle sorte que chacune des deux lignes d'alimentation (V1, V2) peut être reliée aux deux sources d'énergie (10, 12, 14) de telle sorte que le consommateur (16) peut être alimenté par le biais des deux lignes d'alimentation (V1, V2) respectivement à partir des deux sources d'énergie (10, 12, 14),
**caractérisé en ce que**
- les deux sous-réseaux (6, 8) possèdent respectivement deux réseaux partiels (18, 20, 22, 24) et le module de puissance (28) possédant deux convertisseurs de tension continue (32, 34), lesquels constituent une limite entre le premier et le deuxième sous-réseau (6, 8),
- un premier des deux convertisseurs de tension continue (32) relie un premier réseau partiel (18) du premier sous-réseau (6) à un premier réseau partiel (22) du deuxième sous-réseau (8),
- un deuxième des deux convertisseurs de tension continue (34) relie un deuxième réseau partiel (20) du premier sous-réseau (6) à un deuxième réseau partiel (24) du deuxième sous-réseau (8), de telle sorte que deux réseaux partiels (18, 20, 22, 24) de différents sous-réseaux (6, 8) sont à chaque fois reliés par le biais d'un convertisseur de tension continue (32, 34).

2. Réseau de bord (4) selon la revendication 1,
la source d'énergie (10, 12, 14) d'un sous-réseau (6, 8) respectif étant raccordée directement uniquement à ce sous-réseau (6, 8) et étant reliée à l'autre sous-réseau (6, 8) uniquement de manière indirecte par le biais du module de puissance (28),
le consommateur (16) étant raccordé directement uniquement audit sous-réseau (6, 8) et à l'autre sous-réseau (6, 8) uniquement de manière indirecte par le biais du module de puissance (28).

3. Réseau de bord (4) selon l'une des revendications 1 ou 2,
le premier sous-réseau (6) présentant un niveau de tension inférieur à celui du deuxième sous-réseau (8).

4. Réseau de bord (4) selon l'une des revendications 1 à 3,
le consommateur (16) étant raccordé à celui des deux sous-réseaux (6, 8) qui présente le niveau de tension le plus élevé.

5. Réseau de bord (4) selon l'une des revendications 1 à 4,
le premier sous-réseau (6) présentant un niveau de tension de 12 V et le deuxième sous-réseau (8) un niveau de tension de 48 V, et le consommateur (16) étant raccordé au deuxième sous-réseau (8).

6. Réseau de bord (4) selon l'une des revendications 1 à 5,
un premier accumulateur électrique en tant que première source d'énergie (10) étant raccordé au premier sous-réseau (6) et
un deuxième accumulateur électrique en tant que deuxième source d'énergie (12) ainsi qu'un générateur en tant que source d'énergie supplémentaire (14) étant raccordés au deuxième sous-réseau (8).

7. Réseau de bord (4) selon la revendication 6,
le générateur (14) et le deuxième accumulateur électrique (12) étant raccordés à différents réseaux partiels (22, 24) du deuxième sous-réseau (8).

8. Réseau de bord (4) selon l'une des revendications 1 à 7,
le module de puissance (28) possédant au moins un convertisseur de tension continue (32, 34) par le biais duquel les deux sous-réseaux (6, 8) sont reliés entre eux, afin d'alimenter l'un des sous-réseaux (6, 8) en énergie provenant de l'autre sous-réseau (6, 8) et inversement.

9. Réseau de bord (4) selon l'une des revendications 1 à 8,
les deux sous-réseaux (6, 8) possédant respectivement deux réseaux partiels (18, 20, 22, 24),
les deux réseaux partiels (18, 20) du premier sous-réseau (6) étant reliés entre eux de manière séparable par le biais d'un premier commutateur (36), et
les deux réseaux partiels (22, 24) du deuxième sous-réseau (8) étant reliés entre eux de manière séparable par le biais d'un deuxième commutateur (38).

10. Réseau de bord (4) selon la revendication 9,
les deux commutateurs (36, 38) étant intégrés dans le module de puissance (28).

11. Réseau de bord (4) selon l'une des revendications 1 à 10,
le module de puissance (28) possédant une connexion (40) propre pour chaque sous-réseau (18, 20, 22, 24).

12. Réseau de bord (4) selon l'une des revendications 1 à 11,
au moins une source d'énergie (10, 12, 14) respective du premier sous-réseau (6) et du deuxième sous-réseau (8) étant réalisée sous la forme d'un accumulateur électrique et étant intégrée dans le module de puissance (28).

13. Réseau de bord (4) selon l'une des revendications 1 à 12,
celui-ci possédant au moins un consommateur de confort (26) qui n'est pas pertinent pour la sécurité et qui est raccordé à l'une des sources d'énergie (10, 12, 14) par le biais d'une seule ligne d'alimentation.
